(19) Europäisches Patentamt European Patent Office Office européen des brevets

(11) **EP 3 535 607 B1**

(12) **EUROPEAN PATENT SPECIFICATION**

(45) Date of publication and mention
of the grant of the patent:
**20.04.2022 Bulletin 2022/16**

(21) Application number: **16794564.1**

(22) Date of filing: **07.11.2016**

(51) International Patent Classification (IPC):
***G01V 99/00*** (2009.01)

(52) Cooperative Patent Classification (CPC):
**G01V 99/005**

(86) International application number:
**PCT/EP2016/076828**

(87) International publication number:
**WO 2018/082790 (11.05.2018 Gazette 2018/19)**

(54) **SEISMIC DATA PROCESSING ARTIFICIAL INTELLIGENCE**

VERARBEITUNG SEISMISCHER DATEN MIT KÜNSTLICHER INTELLIGENZ

INTELLIGENCE ARTIFICIELLE DE TRAITEMENT DE DONNÉES SISMIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.09.2019 Bulletin 2019/37**

(73) Proprietors:
• **Services Pétroliers Schlumberger
75007 Paris (FR)**
Designated Contracting States:
**FR**
• **Geoquest Systems B.V.
2586 BJ The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **SALMAN, Nader
4056 Tananger, (NO)**
• **AARRE, Victor
Stavanger N-4068, (NO)**
• **TRONERUD, Jarl Eirik
4056 Tananger, (NO)**

(74) Representative: **Schlumberger Intellectual
Property Department
Parkstraat 83
2514 JG Den Haag (NL)**

(56) References cited:
EP-A1- 1 036 341          EP-A1- 2 975 438
WO-A1-2016/171778    GB-A- 2 503 557
US-A- 4 713 775          US-A1- 2005 171 700
US-A1- 2012 053 971

## Description

### Background

Simulating reservoir behavior using computer models can provide information that can guide petroleum extraction efforts. Therefore, petroleum extraction may be performed together with simulation of the respective reservoir's behavior. However, reservoirs can include complex geometry and experience complicated actions. Examples of such geometry and actions include high-contrast fluvial sands, fractured carbonate reservoirs, other fractures, faults, pinch-outs, wells that get turned on or off, and wells that exhibit large changes in well controls. Reservoirs with these and other features can be difficult to accurately simulate using computer models.

Recently, artificial intelligence has been proposed to assist in the identification of faults in subterranean domains, thereby facilitating the creation of the geological models. Artificial intelligence generally has to be trained, however, to make appropriate inferences. Training such artificial intelligence can be both time-consuming and expensive. Moreover, the data relied upon to undertake such training is often proprietary, and thus training data that might be used to train artificial intelligence for one user may not be available to train the artificial intelligence for another user.

EP 1 036 341 A1 (SCHLUMBERGER LTD [US] ; SCHLUMBERGER TECHNOLOGY BV [NL]; SCHLUMBERGER S) 20 September 2000 (2000-09-20) discloses a method for processing geological data comprising receiving a geological data processing tool at a client system.

### Summary

Embodiments of the disclosure may provide a method for processing geological data. The method includes receiving a geological data processing tool at a client system. The geological data processing tool includes artificial intelligence, and the geological data processing tool is generated by a geological processing tool provider. The method also includes obtaining training data for the geological data processing tool. The training data includes a plurality of labels. The method also includes training the geological data processing tool based on the training data, receiving data representing a physical, subterranean volume, identifying one or more geological features in the subterranean volume by using the geological data processing tool after training the geological data processing tool, and modifying, using the client system, one or more parameters of the geological data processing tool, or one or more labels of the plurality of labels.

In an embodiment, the training data is protected from exposure to a provider system from which the geological processing tool is received.

In an embodiment, the client system comprises a remote server accessible over the internet, and wherein the training data is held in an encrypted database accessible by the remote server and not accessible to the provider system.

In an embodiment, the artificial intelligence includes a convolutional neural network, a support vector machine, or both.

In an embodiment, training the geological data processing tool includes receiving an identification of one or more geological features in one or more images of the training data, and the plurality of labels are extensible by the client system.

In an embodiment, the one or more geological features includes at least one of horizons, layer interfaces, geobodies, faults, sand channels, gas chimneys, pipelines, boreholes, well top markers, or pore pressure.

In an embodiment, receiving the training data includes obtaining the training data from a database accessible to the geological tool provider.

In an embodiment, receiving the training data includes receiving the training data from the client system, and the geological processing tool is not accessible to the geological processing tool provider after being trained.

Embodiments of the disclosure may also provide a computing system including one or more processors, and a memory system including one or more non-transitory computer-readable media storing instructions that, when executed by at least one of the one or more processors, cause the computing system to perform operations. The operations include receiving a geological data processing tool at a client system. The geological data processing tool includes artificial intelligence, and the geological data processing tool is generated by a geological processing tool provider. The operations also include obtaining training data for the geological data processing tool. The training data includes a plurality of labels. The operations also include training the geological data processing tool based on the training data, receiving data representing a physical, subterranean volume, identifying one or more geological features in the subterranean volume by using the geological data processing tool after training the geological data processing tool, and modifying, using the client system, one or more parameters of the geological data processing tool, or one or more labels of the plurality of labels.

Embodiments of the disclosure may further provide a non-transitory computer-readable medium storing instructions that, when executed by one or more processors of a computing system, cause the computing system to perform operations. The operations include receiving a geological data processing tool at a client system. The geological data processing tool includes artificial intelligence, and the geological data processing tool is generated by a geological processing tool provider. The operations also include obtaining training data for the geological data processing tool. The training data includes a plurality of labels. The operations also include training the geological data processing tool based on the training data, receiving data representing a physical, subterranean volume, identifying one or more geological features in the subterranean volume by using the geological data processing tool after training the geological data processing tool, and modifying, using the client system, one or more parameters of the geological data processing tool, or one or more labels of the plurality of labels.

It will be appreciated that this summary is intended merely to introduce some aspects of the present methods, systems, and media, which are more fully described and/or claimed below. Accordingly, this summary is not intended to be limiting.

Brief Description of the Drawings

The accompanying drawings, which are incorporated in and constitute a part of this specification, illustrate embodiments of the present teachings and together with the description, serve to explain the principles of the present teachings. In the figures:

Figure 1 illustrates an example of a system that includes various management components to manage various aspects of a geologic environment, according to an embodiment.
Figure 2 illustrates a simplified, schematic view of a system for processing geological data, according to an embodiment.
Figure 3 illustrates a flowchart of a method for processing geological data, according to an embodiment.
Figure 4 illustrates a flowchart of a workflow for processing geological data, e.g., by implementing an embodiment of the method of Figure 3, according to an embodiment.
Figure 5 illustrates a schematic view of generating training data, according to an embodiment.
Figure 6 illustrates a schematic view of layers of a convolutional neural network, according to an embodiment.
Figure 7 illustrates an example of four-dimensional data that can be converted into machine learning training data sets, according to an embodiment.
Figure 8 illustrates examples of interpreted data that can be converted into machine learning training data sets, according to an embodiment.
Figure 9 illustrates a schematic view of a computing system, according to an embodiment.

Detailed Description

In general, embodiments of the present disclosure may provide a flexible artificial intelligence (AI) tool for detecting and classifying geological features, e.g., in seismic data, in order to assist in generating a model of a subterranean domain. The tool may be provided as part of a "kit" which may be executed by a client system and/or on a remote server, such as a commercially-available, hosted computing environments. Further, the AI tool may be included in the kit in an "untrained" state, such that the user (e.g., a corporate client) may employ the user's training data to train the AI tool. Encapsulating the training data (and associated ground-truth data) in the client's (or a remote) system and away from the tool-provider's system may, in some embodiments, protect proprietary training data belonging to the client from exposure to the tool-provider's system. In other embodiments, the AI tool may be provided in the kit in a trained state, with the provider having trained the AI tool with available training data. In either situation, the client may be able to modify the AI tool, changing hyperparameters and/or the layers of the algorithm employed by the AI tool. Further, either case may allow the client's users develop their own training data, ground-truth data, classifiers.

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

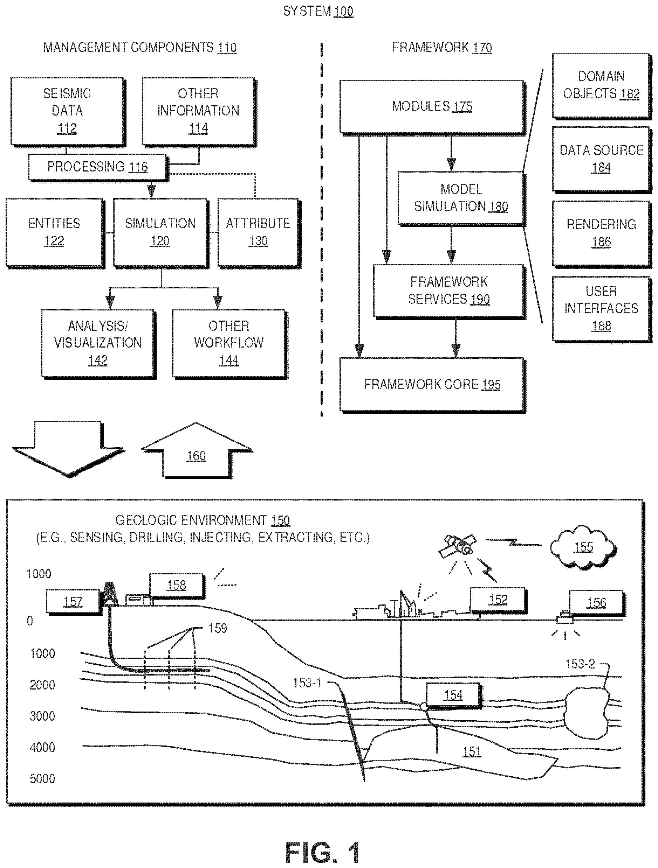

Figure 1 illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Figure 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT® .NET® framework (Redmond, Washington), which provides a set of extensible object classes. In the .NET® framework, an object class encapsulates a module of reusable code and associated data structures. Object classes can be used to instantiate object instances for use in by a program, script, etc. For example, borehole classes may define objects for representing boreholes based on well data.

In the example of Figure 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Figure 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE™ reservoir simulator (Schlumberger Limited, Houston Texas), the INTERSECT™ reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL® seismic to simulation software framework (Schlumberger Limited, Houston, Texas). The PETREL® framework provides components that allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN® framework environment (Schlumberger Limited, Houston, Texas) allows for integration of add-ons (or plug-ins) into a PETREL® framework workflow. The OCEAN® framework environment leverages .NET® tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Figure 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® model-centric software package that hosts OCEAN® framework applications. In an example embodiment, the PETREL® software may be considered a data-driven application. The PETREL® software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Figure 1, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Figure 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Figure 1, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Figure 1 shows a satellite in communication with the network 155 that may be configured for communications, noting that the satellite may additionally or instead include circuitry for imagery (e.g., spatial, spectral, temporal, radiometric, etc.).

Figure 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL® software, for example, that operates on seismic data, seismic attribute(s), etc. As an example, a workflow may be a process implementable in the OCEAN® framework. As an example, a workflow may include one or more worksteps that access a module such as a plug-in (e.g., external executable code, etc.).

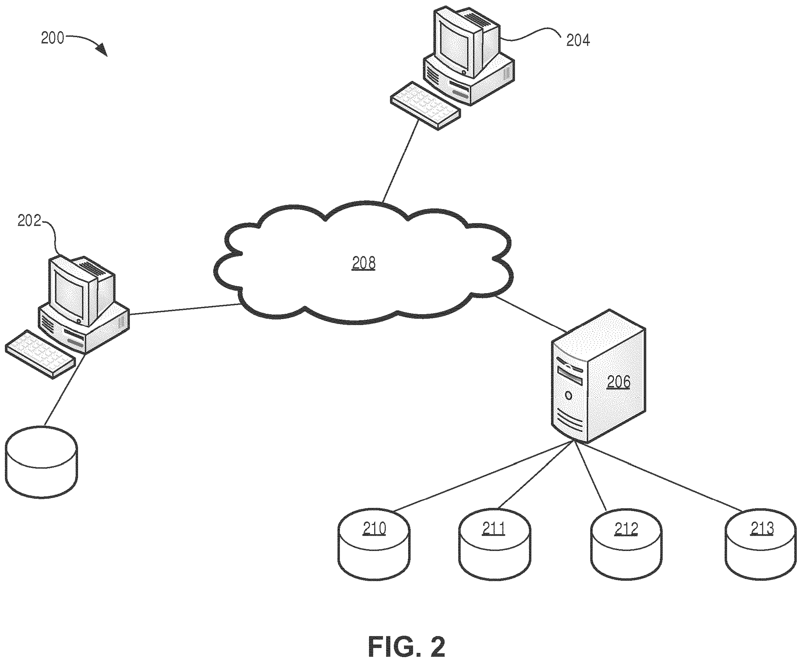

Figure 2 illustrates a conceptual view of a system 200 for processing data, such as geological data, according to an embodiment. The system 200 may include a client system 202, a geological tool provider system (or "provider system") 204, and a remote server 206. Although illustrated simplistically as a single computing device, it will be appreciated that any of the client system 202, provider system 204, and/or remote server 206 may be provided by a several computers, e.g., arranged in any type of network.

In some embodiments, the remote server 206 may be locally-hosted on the client system 202 (and thereby accessible thereto). In other embodiments, as shown, the remote server 206 may be accessible to the client system 202 remotely via a network (e.g., the internet) 208. The remote server 206 may, in some embodiments, also be accessible to the provider system 204. For example, the provider system 204 may be able to transmit a geological data processing tool, as will be described in greater detail below, to the remote server 206 for access by the client system 202. In other embodiments, the provider system 204 may be prevented from accessing the remote server 206, and such a geological data processing tool may be uploaded thereto from the client system 202 after being transmitted thereto from the provider system 204.

The remote server 206 may have access to one or more databases (four are shown: 210, 211, 212, 213). These databases 210-213 may store information, including, for example, training data, ground-truth data, seismic cubes, and/or other data. Some databases 210-213 may be encrypted or otherwise may not be accessible to the provider system 204. Accordingly, proprietary data loaded into the remote server 106 may be secured. Similarly, the client system 202 may include one or more databases (one shown: 214). The database 214 may contain client-specific data, such as propriety training data, ground truths, seismic cubes, etc. The contents of the database 214 may be uploaded, in whole or in part, to one or more of the databases 210-213 of the remote server 106 and/or may be secured from access by the provider system 204.

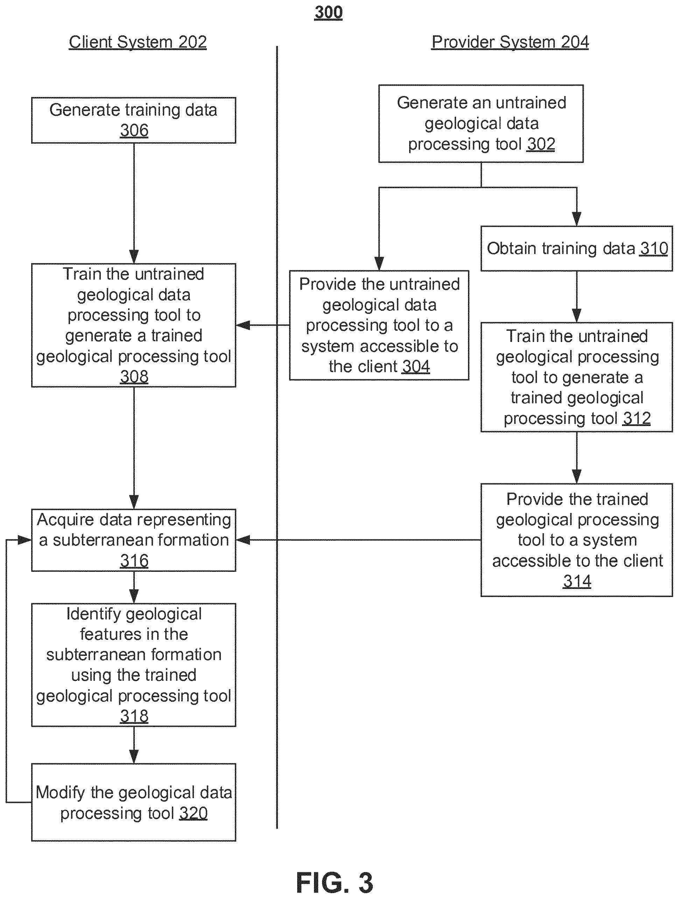

Figure 3 illustrates a flowchart of a method 300 for processing geological data, e.g., using artificial intelligence (machine learning), according to an embodiment. The method 300 may include a workflow involving at least two systems: the client system 202 and the provider system 204. As shown in Figure 2, a remote server 206 may also be employed, e.g., to provide computing power for the client system 202. In other embodiments, the client system 202 may not be connected to such a remote system, but may instead provide such computing locally. Further, although illustrated in Figure 3 as communicating directly to one another, it will be appreciated that the "system accessible to the client" may not be the client system 202 directly, but may refer to communicating with the remote server 206, which may then be accessed by the client system 202.

The method 300 may begin, on the provider system 204 side, by generating an untrained geological data processing tool, as at 302. The processing tool may be an artificial intelligence system. A variety of such systems are known and may be employed. One such system is a convolution neural network, as will be described in greater detail below. Another example is a support vector machine. Although convolution neural networks and support vector machines may be used, these are just two examples among many contemplated.

The method 300 may include the provider system 204 providing the untrained geological data processing tool to a system accessible to the client, as at 304. This may include providing the tool to the remote server 206 or to the client system 202, as shown. In turn, the client system 202 may upload the untrained geological data processing tool to the remote server 206.

The client system 202 may, in some embodiments, generate training data, as at 306. The training data may provide ground truth data about classifications of geological features. For example, as will be described in greater detail below, the training data may include seismic or other types of geological data (e.g., seismic cubes) that may be viewed, and geological features picked, by an expert human user, or using another reliable method of identifying and/or classifying geological features, so as to generate the training data. Examples of such geological features include horizons, layers, geobodies, faults, channels, gas chimneys, pipelines, boreholes, well top markers, and pore pressure.

The client system 202 may employ the training data generated at 306 to train the untrained geological data processing tool, thereby generating a trained geological data processing tool, as at 308. For example, the tool may include data converters configured to translate training data into a format that can be utilized by the tool, as will be described in greater detail below. Further, the training data may be stored in a manner accessible to the tool, e.g., in one of the databases 210-213.

In some embodiments, the client system 202 may not have access to training data or may otherwise not be configured to develop such training data. Accordingly, rather than providing the untrained geological data processing tool to such a client system 202, the provider system 204 may obtain the training data, as at 310. Such training data may be non-proprietary, such as developed by academia or otherwise available for use by the provider system 204. In some embodiments, such training data may be stored in the provider system 204 and may be protected from exposure to the client system 202, but in other embodiments, may be available thereto.

The provider system 204 may then train the untrained geological processing tool to generate a trained geological processing tool, as at 312. Such training may proceed in any manner, with an example being provided below, and may rely on experts available to the provider system 204. With the tool trained, the tool may be provided to the system accessible to the client, as at 314. This latter case, with the trained tool provided to the system accessible to the client, may be suited for use with relatively small corporate clients that may not have access to training data or may lack expertise to generate the same. In other embodiments, the tool provider may train the tool, and the client may provider further training data/training of the tool. For example, the labels utilized by the tool may be adjusted or extended by the client during subsequent training.

Once the client system 202 has access to a trained geological data processing tool, the process of employing the tool may commence. Accordingly, the client system 202 may acquire data representing a subterranean formation, as at 316, e.g., including one or more unclassified features represented in a seismic cube, well profile, geological model, or any other data set representing one or more physical characteristics of the subterranean volume. The data may be collected using one or more sensors, e.g., seismic receivers (geophones or hydrophones), well logging sensors, and/or the like.

The method 300 may then include modifying the geological data processing tool, as at 320. Such modifying may proceed in response to user inputs. The user inputs may include editing hyperparameters of the geological processing tool, e.g., as part of the training and/or part of the classification components of the geological processing tool.

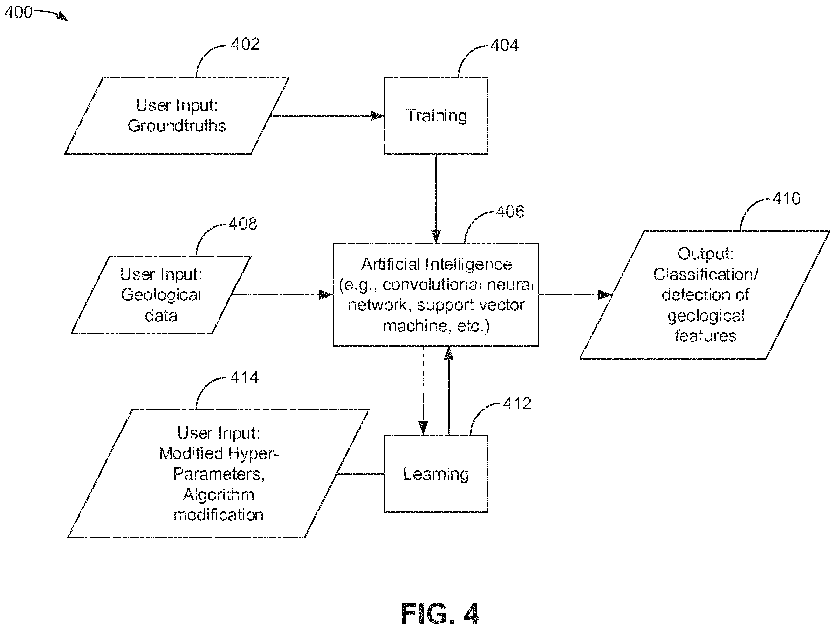

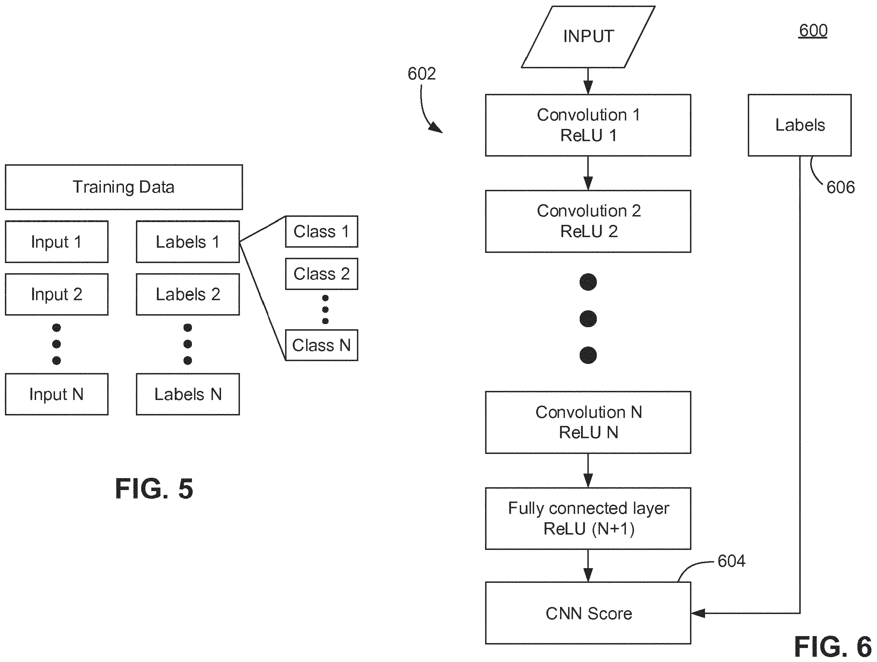

Figure 4 illustrates a schematic view of an example workflow 400, which may implement an embodiment of the method 300. The workflow 400 may begin by acquiring input from a user, as at 402. The input may be training data. Figure 5 illustrates an example of such training data. As shown, labels 1, 2, ..., N are assigned to inputs 1, 2, ..., N. The labels may be assigned based on classes associated therewith, such as by a human expert. Further, the labels may be adjustable, or otherwise extensible, by the client system 202.

This training data may be employed in a training process or "brick" of the workflow 400, as indicated at 404. The training brick 404 may employ the training data to establish connections between neurons in a neural network of a neural network or otherwise train another type of artificial intelligence, as represented by brick 406.

Once the artificial intelligence 406 is trained at 404, the artificial intelligence may receive user input, as indicated at 408. The user-input may include seismic cubes and/or other geological data, to which a classification regime may be imposed, e.g., to identify and locate various geological features. The artificial intelligence 406 may thus output classification and/or detection of such geological features, as at 410.

As noted above, there are several different types of artificial intelligence that may be employed with a geological data processing tool. A convolutional neural network is one example. Figure 6 illustrates a schematic view of a workflow 600 for such a convolutional neural network. The convolutional neural network may receive input, as at 602, which is then fed to one or several layers 602, as will be described in greater detail below. The output of the layers may be a convolutional neural network (CNN) score 604, based upon which a label 606 may be assigned.

Convolution neural networks (ConvNets) are a continuation of multiple layer perceptron (MLP). In an MLP, a core performs simple computations by taking the weighted sum of the other cores that serve as input to it. The network may be structured as different layers of cores, where each core in a layer is connected to the other cores in the previous layers. There are four kinds of layers in a ConvNet architecture: convolutional (conv), rectifying linear unit (ReLU), pooling (pool), and fully connected (fcLayer). Each convolutional layer transforms a set of feature maps to another set of feature maps using the convolution operation $\otimes$ based on a set of filters. Mathematically, if $W_i^l$ and $b_i^l$ respectively denote the weight matrix and the bias vector of the $i^{th}$ filter of the $l^{th}$ convolutional layer and $M_i^l$ it's activation map:

$$M_i^l = M^{l-1} \otimes W_i^l + b_i^l$$

ReLU is the activation function, for the $i^{th}$ unit of layer $l$ it is defined as follows:

$$M_i^l = \max(M_i^{l-1}, 0)$$

Pooling layers perform a spatial down sampling of the input feature map. Pooling is used to decrease the input dimensionality of the next layer. Pooling may facilitate the representation becoming invariant to small translations of the input.

After potentially several convolutional and ReLU layers (as shown 1, 2, ... n), the high-level reasoning in the neural network is done via fully connected layers (fcLayer). Let $W^l$ denote the incoming weight matrix and $b^l$ the bias vector of a fully connected layer $l$ then:

$$M^l = \text{htile}(M^{l-1}) * W^l \oplus b^l$$

where the htile(.) operator tiles the feature-maps of the input volume along the height, * is matrix multiplication and $\oplus$ is elementwise addition.

The ConvNets may also employ a regularization method (e.g., dropout) to prevent overfitting. Further, Local Response Normalization (LRN) may be a layer useful when dealing with ReLU neurons. LRN may normalize ReLU functions, which may have unbounded activations. This facilitates detecting high frequency features with a large response.

The ConvNets may also apply a loss function to compare the network's output for a training example against the ground truth output. One loss function is a squared Euclidian distance, expressed as

$$L = \frac{1}{2}\sum_i (y_i - z_i)^2$$

where $y_i$ is the output of the $i$-th network output unit, and $z_i$ is the $i$-th value of the target output. Another loss function is cross-entropy loss, defined by:

$$L = -\sum_i y_i \log z_i.$$

Returning to Figure 4, based on the output 410, the workflow 400 may additionally include a "learning" brick 412, which may allow for enhancing subsequent uses of the artificial intelligence 406. In the learning brick 412, the workflow 400 may include receiving user input, as at 414, such as modified hyperparameters, modifications to classification algorithms (e.g., adding or taking away convolution and/or ReLU layers 602), selection of a different algorithm, etc.

Modifying the hyperparameters may allow tuning the artificial intelligence for a faster convergence rate. Hyperparameters are variables set before optimizing the model's parameters. Setting the values of hyperparameters can be seen as model selection, e.g., choosing which model to use from the hypothesized set of possible models. Hyperparameters are often set by hand, selected by some search algorithm, or optimized by a "hyperlearner". Neural networks may have many hyperparameters, including those which specify the structure of the network itself and those which determine how the network is trained.

The modifications/adjustments made via the user input 414 in the learning brick 412 may then be applied back to the artificial intelligence brick 406. The modified artificial intelligence brick 406 may then result in different output 410 than would have otherwise been provided without such learning. In an embodiment, the output 410 may be or be employed to create a subsurface model of the subterranean domain of interest, including an identification of one or more geological features.

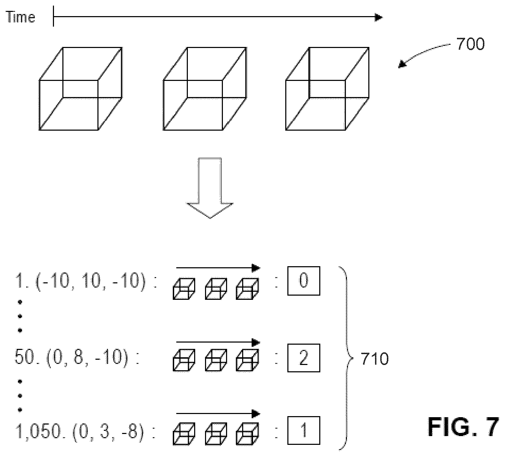

The process of training the artificial intelligence is illustrated in greater detail in the example of Figure 7. In particular, Figure 7 illustrates an example of four-dimensional data that may be converted into machine learning training data sets, according to an embodiment. As shown in Figure 7, the four-dimensional data may represent, for example, a simulated reservoir model 700. Simulated reservoir model 700 may visualize or otherwise include reservoir data, such as, for example, rock porosity, permeability, water saturation, etc. Additionally, simulated reservoir model 700 may visualize or otherwise show a simulation of a reservoir over time.

In some embodiments, simulated reservoir model 700 may be in data that is obtained by a computing device. In further embodiments, simulated reservoir model 700 may include analysis data, indicating, for example, positions of geological features, positions of fluids, etc. within the reservoir model. Accordingly, simulated reservoir model 700 and the analysis data may be in data that is obtained by the computing device.

In various embodiments, the simulated reservoir model 700 may be partitioned into subsections. For example, simulated reservoir model 700 may be split into four-dimensional voxels of equal size. Then, the subsections may be labeled, resulting in the generation of labeled data 710.

Labeled data 710 depicts subsection 1 (center at -10 meters, 10 meters, -10 meters (x,y,z)), subsection 50 (center at 0 meters, 8 meters, -10 meters (x,y,z)), and subsection 1,050 (center at 0 meters, 3 meters, -8 meters (x,y,z)). The subsections may indicate and/or visualize values of properties within the subsection, including any changes over time.

Subsection 1 is associated with a voxel in a position that may not have notable properties and/or features that are being analyzed. Accordingly, the integer label may indicate a value of 0.

Subsection 50 is associated with a voxel in a position that may show or indicate a second property and/or feature. Accordingly, the integer label may indicate a value of 2.

Subsection 1,050 is associated with a voxel in a position that may show or indicate a first property and/or feature. Accordingly, the integer label may indicate a value of 1.

In various embodiments, labeled data 710 may be used as part of a training data set to train a machine learning model.

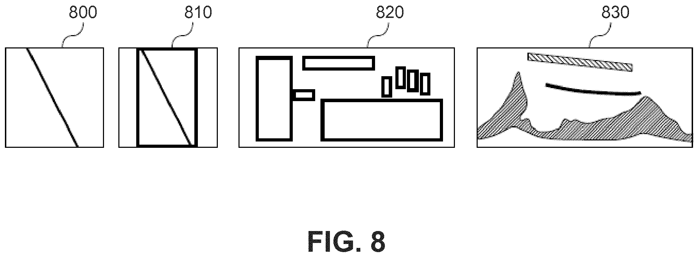

Figure 8 illustrates examples of interpreted data that may be converted into machine learning training data sets, according to an embodiment. Subsection 800 may represent a subsection that is classified based on a geological structure (or feature) within the subsection. For example, subsection 800 may include a fault (to name just one example of a geological feature that may be detected), and interpreted data associated with subsection 800 may include an image of the subsection and metadata indicating that a fault is within the subjection. Accordingly, a label may be generated (e.g., a text label, a binary label, etc.) indicating that subsection 800 is associated with a fault.

Subsection 810 may represent a subsection that is classified based on a geological structure within the subsection, where the structure is also localized by a bounding box. For example, subsection 810 may include a fault, and interpreted data associated with subsection 810 may include an image of the subsection, metadata indicating that a fault is within the subsection, and/or metadata indicating xy coordinates of a bounding box surrounding the fault. Accordingly, a label may be generated indicating that subsection 810 is associated with a fault and coordinates of the bounding box.

Subsection 820 may represent a subsection that is associated with multiple detected objects within the subsection. For example, subsection 820 may include faults, salt bodies, and a horizon, and interpreted data associated with subsection 820 may include an image of the subsection and metadata indicating that faults, salt bodies, and a horizon are within the subsection. Accordingly, a label may be generated indicating that subsection 820 is associated with faults, salt bodies, and a horizon.

Subsection 830 may represent a subsection that is segmented based on multiple detected objects within the subsection. For example, subsection 830 may include faults, salt bodies, and a horizon, and interpreted data associated with subsection 820 may include an image of the subsection, metadata indicating that faults, salt bodies, and a horizon are within the subsection, and/or metadata indicating ranges of xy coordinates associated with the objects. Accordingly, a label may be generated indicating that subsection 820 is associated with faults, salt bodies, and a horizon, and indicating ranges of coordinates associated with the objects. Thus, the labels generated as in Figure 5 are achieved, according to this embodiment.

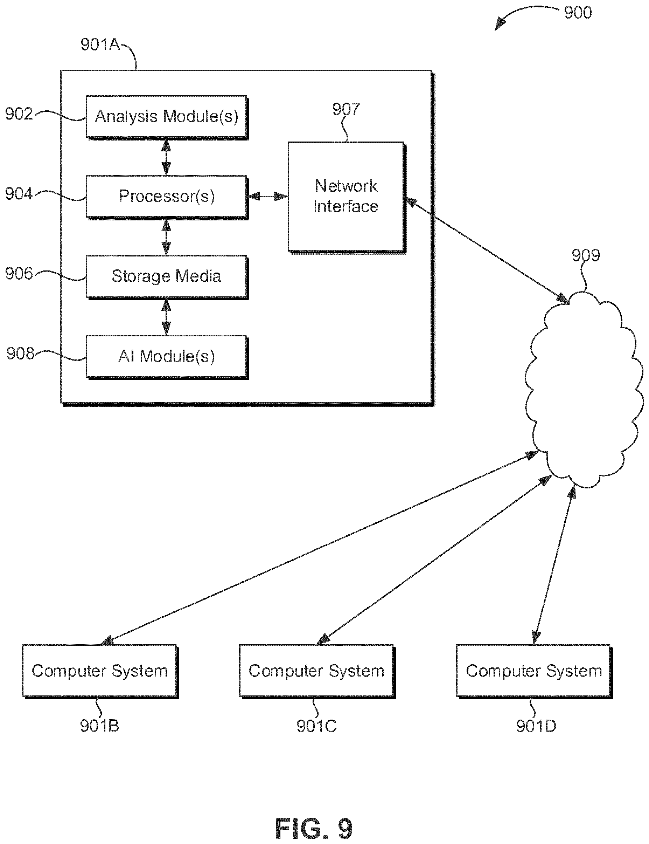

In some embodiments, the methods of the present disclosure may be executed by a computing system. Figure 9 illustrates an example of such a computing system 900, in accordance with some embodiments. The computing system 900 may include a computer or computer system 901A, which may be an individual computer system 901A or an arrangement of distributed computer systems. The computer system 901A includes one or more analysis modules 902 that are configured to perform various tasks according to some embodiments, such as one or more methods disclosed herein. To perform these various tasks, the analysis module 902 executes independently, or in coordination with, one or more processors 904, which is (or are) connected to one or more storage media 906. The processor(s) 904 is (or are) also connected to a network interface 907 to allow the computer system 901A to communicate over a data network 909 with one or more additional computer systems and/or computing systems, such as 901B, 901C, and/or 901D (note that computer systems 901B, 901C and/or 901D may or may not share the same architecture as computer system 901A, and may be located in different physical locations, e.g., computer systems 901A and 901B may be located in a processing facility, while in communication with one or more computer systems such as 901C and/or 901D that are located in one or more data centers, and/or located in varying countries on different continents).

A processor may include a microprocessor, microcontroller, processor module or subsystem, programmable integrated circuit, programmable gate array, or another control or computing device.

The storage media 906 may be implemented as one or more computer-readable or machine-readable storage media. Note that while in the example embodiment of Figure 9 storage media 906 is depicted as within computer system 901A, in some embodiments, storage media 906 may be distributed within and/or across multiple internal and/or external enclosures of computing system 901A and/or additional computing systems. Storage media 906 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY® disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 900 contains one or more artificial intelligence (AI) module(s) 908. In the example of computing system 900, computer system 901A includes the AI module 908. In some embodiments, a single AI module may be used to perform some aspects of one or more embodiments of the methods disclosed herein. In other embodiments, a plurality of AI modules may be used to perform some aspects of methods herein.

It should be appreciated that computing system 900 is merely one example of a computing system, and that computing system 900 may have more or fewer components than shown, may combine additional components not depicted in the example embodiment of Figure 9, and/or computing system 900 may have a different configuration or arrangement of the components depicted in Figure 9. The various components shown in Figure 9 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Geologic interpretations, models, and/or other interpretation aids may be refined in an iterative fashion; this concept is applicable to the methods discussed herein. This may include use of feedback loops executed on an algorithmic basis, such as at a computing device (e.g., computing system 900, Figure 9), and/or through manual control by a user who may make determinations regarding whether a given step, action, template, model, or set of curves has become sufficiently accurate for the evaluation of the subsurface three-dimensional geologic formation under consideration.

**Claims**

1. A method for processing geological data, the method comprising:

   receiving a geological data processing tool at a client system (304), wherein the geological data processing tool comprises artificial intelligence, and wherein the geological data processing tool is generated by a geological processing tool provider; obtaining training data (314) for the geological data processing tool, wherein the training data comprises a plurality of labels; training the geological data processing tool (308) based on the training data; receiving data (316) representing a physical, subterranean volume; identifying one or more geological features (318) in the subterranean volume by using the geological data processing tool after training the geological data processing tool; and modifying (320), using the client system, one or more parameters of the geological data processing tool, or one or more labels of the plurality of labels.

2. The method of claim 1, wherein the training data is protected from exposure to a provider system from which the geological processing tool is received.

3. The method of claim 2, wherein the client system comprises a remote server accessible over the internet, and wherein the training data is held in an encrypted database accessible by the remote server and not accessible to the provider system.

4. The method of claim 1, wherein the artificial intelligence comprises a convolutional neural network, a support vector machine, or both.

5. The method of claim 1, wherein training the geological data processing tool comprises receiving an identification of one or more geological features in one or more images of the training data, wherein the plurality of labels are extensible by the client system.

6. The method of claim 1, wherein the one or more geological features comprise at least one of horizons, layer interfaces, geobodies, faults, sand channels, gas chimneys, pipelines, boreholes, well top markers, or pore pressure.

7. The method of claim 1, wherein receiving the training data comprises obtaining the training data from a database accessible to the geological tool provider.

8. The method of claim 1, wherein receiving the training data comprises receiving the training data from the client system, and wherein the geological processing tool is not accessible to the geological processing tool provider after being trained.

9. A computing system (901 B,C,D) comprising:

   one or more processors (904); and a memory system (906) including one or more non-transitory computer-readable media storing instructions that, when executed by at least one of the one or more processors, cause the computing system to perform operations, the operations comprising:

   receiving a geological data processing tool at a client system, wherein the geological data processing tool comprises artificial intelligence, and wherein the geological data processing tool is generated by a geological processing tool provider; obtaining training data for the geological data processing tool, wherein the training data comprises a plurality of labels; training the geological data processing tool based on the training data; receiving data representing a physical, subterranean volume; identifying one or more geological features in the subterranean volume by using the geological data processing tool after training the geological data processing tool; and modifying, using the client system, one or more parameters of the geological data processing tool, or one or more labels of the plurality of labels.

10. The system of claim 9, wherein the training data is protected from exposure to a provider system from which the geological processing tool is received.

11. The system of claim 10, wherein the client system comprises a remote server accessible over the internet, and wherein the training data is held in an encrypted database accessible by the remote server and not accessible to the provider system.

12. The system of claim 9, wherein the artificial intelligence comprises a convolutional neural network, a support vector machine, or both.

13. The system of claim 9, wherein training the geological data processing tool comprises receiving an identification of one or more geological features in one or more images of the training data, wherein the plurality of labels are extensible by the client system.

14. The system of claim 9, wherein the one or more geological features comprise at least one of horizons, layer interfaces, geobodies, faults, sand channels, gas chimneys, pipelines, boreholes, well top markers, or pore pressure.

15. The system of claim 9, wherein receiving the training data comprises obtaining the training data from a database accessible to the geological tool provider.

16. The system of claim 9, wherein receiving the training data comprises receiving the training data from the client system, and wherein the geological processing tool is not accessible to the geological processing tool provider after being trained.

17. A non-transitory computer-readable medium storing instructions that, when executed by at least one processor (904) of a computing system (901), cause the computing system to perform operations, the operations comprising:

receiving a geological data processing tool at a client system, wherein the geological data processing tool comprises artificial intelligence, and wherein the geological data processing tool is generated by a geological processing tool provider;

obtaining training data for the geological data processing tool, wherein the training data comprises a plurality of labels;

training the geological data processing tool based on the training data;

receiving data representing a physical, subterranean volume;

identifying one or more geological features in the subterranean volume by using the geological data processing tool after training the geological data processing tool; and

modifying, using the client system, one or more parameters of the geological data processing tool, or one or more labels of the plurality of labels.

18. The medium of claim 17, wherein the training data is protected from exposure to a provider system from which the geological processing tool is received.

19. The medium of claim 18, wherein the client system comprises a remote server accessible over the internet, and wherein the training data is held in an encrypted database accessible by the remote server and not accessible to the provider system.

20. The medium of claim 17, wherein the artificial intelligence comprises a convolutional neural network, a support vector machine, or both.

**Patentansprüche**

1. Verfahren zum Verarbeiten geologischer Daten, wobei das Verfahren umfasst:

Empfangen eines geologischen Datenverarbeitungstools an einem Clientsystem (304), wobei das geologische Datenverarbeitungstool künstliche Intelligenz umfasst, und wobei das geologische Datenverarbeitungstool von einem Anbieter eines geologischen Datenverarbeitungstools erstellt wird;

Erhalten von Trainingsdaten (314) für das geologische Datenverarbeitungstool, wobei die Trainingsdaten mehrere Labels umfassen;

Trainieren des geologischen Datenverarbeitungstools (308) basierend auf den Trainingsdaten;

Empfangen von Daten (316), die ein physisches unterirdisches Volumen darstellen;

Identifizieren eines oder mehrerer geologischer Features (318) im unterirdischen Volumen unter Verwendung des geologischen Datenverarbeitungstools nach dem Trainieren des geologischen Datenverarbeitungstools; und

Modifizieren (320) eines oder mehrerer Parameter des geologischen Datenverarbeitungstools oder eines oder mehrerer Labels der mehreren Labels unter Verwendung des Clientsystems.

2. Verfahren nach Anspruch 1, wobei die Trainingsdaten vor einer Offenlegung an ein Anbietersystem, aus dem das geologische Verarbeitungstool empfangen wird, geschützt sind.

3. Verfahren nach Anspruch 2, wobei das Clientsystem einen über das Internet zugänglichen entfernten Server umfasst, und wobei die Trainingsdaten in einer dem entfernten Server zugänglichen und für das Anbietersystem nicht zugänglichen verschlüsselten Datenbank gehalten werden.

**4.** Verfahren nach Anspruch 1, wobei die künstliche Intelligenz ein Convolutional Neural Network, eine Support Vector Machine oder beides umfasst.

**5.** Verfahren nach Anspruch 1, wobei das Trainieren des geologischen Datenverarbeitungstools ein Empfangen einer Identifikation eines oder mehrerer geologischer Features in einem oder mehreren Bildern der Trainingsdaten umfasst, wobei die mehreren Labels durch das Clientsystem erweiterbar sind.

**6.** Verfahren nach Anspruch 1, wobei das eine oder die mehreren geologischen Features wenigstens eines umfassen aus Horizonten, Schichtgrenzflächen, Geokörpern, Verwerfungen, Sandkanälen, Gaskaminen, Rohrleitungen, Bohrlöchern, Bohrungsoberkantenmarkern oder Porendrücken.

**7.** Verfahren nach Anspruch 1, wobei das Empfangen der Trainingsdaten ein Erhalten der Trainingsdaten aus einer für den Anbieter des geologischen Tools zugänglichen Datenbank umfasst.

**8.** Verfahren nach Anspruch 1, wobei das Empfangen der Trainingsdaten ein Empfangen der Trainingsdaten aus dem Clientsystem umfasst, und wobei das geologische Verarbeitungstool für den Anbieter des geologischen Verarbeitungstools nach dem Trainieren nicht zugänglich ist.

**9.** Rechensystem (901 B,C,D), umfassend:

einen oder mehrere Prozessoren (904); und ein Speichersystem (906), das ein oder mehrere nichtflüchtige rechnerlesbare Medien umfasst, die Anweisungen speichern, die, wenn sie von wenigstens einem des einen oder der mehreren Prozessoren ausgeführt werden, bewirken, dass das Rechensystem Operationen durchführt, wobei die Operationen umfassen:

Empfangen eines geologischen Datenverarbeitungstools an einem Clientsystem, wobei das geologische Datenverarbeitungstool künstliche Intelligenz umfasst, und wobei das geologische Datenverarbeitungstool von einem Anbieter eines geologischen Datenverarbeitungstools erstellt wird;
Erhalten von Trainingsdaten für das geologische Datenverarbeitungstool, wobei die Trainingsdaten mehrere Labels umfassen;
Trainieren des geologischen Datenverarbeitungstools basierend auf den Trainingsdaten;
Empfangen von Daten, die ein physisches unterirdisches Volumen darstellen;
Identifizieren eines oder mehrerer geologischer Features im unterirdischen Volumen unter Verwendung des geologischen Datenverarbeitungstools nach dem Trainieren des geologischen Datenverarbeitungstools; und
Modifizieren eines oder mehrerer Parameter des geologischen Datenverarbeitungstools oder eines oder mehrerer Labels der mehreren Labels unter Verwendung des Clientsystems.

**10.** System nach Anspruch 9, wobei die Trainingsdaten vor der Offenlegung an ein Anbietersystem, aus dem das geologische Verarbeitungstool empfangen wird, geschützt sind.

**11.** System nach Anspruch 10, wobei das Clientsystem einen über das Internet zugänglichen entfernten Server umfasst, und wobei die Trainingsdaten in einer dem entfernten Server zugänglichen und für das Anbietersystem nicht zugänglichen verschlüsselten Datenbank gehalten werden.

**12.** System nach Anspruch 9, wobei die künstliche Intelligenz ein Convolutional Neural Network, eine Support Vector Machine oder beides umfasst.

**13.** System nach Anspruch 9, wobei das Trainieren des geologischen Datenverarbeitungstools ein Empfangen einer Identifikation eines oder mehrerer geologischer Features in einem oder mehreren Bildern der Trainingsdaten umfasst, wobei die mehreren Labels durch das Clientsystem erweiterbar sind.

**14.** System nach Anspruch 9, wobei das eine oder die mehreren geologischen Features wenigstens eines umfassen aus Horizonten, Schichtgrenzflächen, Geokörpern, Verwerfungen, Sandkanälen, Gaskaminen, Rohrleitungen, Bohrlöchern, Bohrungsoberkantenmarkern oder Porendrücken.

**15.** System nach Anspruch 9, wobei das Empfangen der Trainingsdaten ein Erhalten der Trainingsdaten aus einer für den Anbieter des geologischen Tools zugänglichen Datenbank umfasst.

**16.** System nach Anspruch 9, wobei das Empfangen der Trainingsdaten ein Empfangen der Trainingsdaten aus dem Clientsystem umfasst, und wobei das geologische Verarbeitungstool für den Anbieter des geologischen Verarbeitungstools nach dem Trainieren nicht zugänglich ist.

**17.** Nichtflüchtiges rechnerlesbares Medium, das Anweisungen speichert, die, wenn sie von wenigstens einem Prozessor (904) eines Rechensystems (901) ausgeführt werden, bewirken, dass das Rechensystem Operationen ausführt, wobei die Operationen umfassen:

Empfangen eines geologischen Datenverarbeitungstools an einem Clientsystem, wobei das geologische Datenverarbeitungstool künstliche Intelligenz umfasst, und wobei das geologische Datenverarbeitungstool von einem Anbieter eines geologischen Datenverarbeitungstools erstellt wird;
Erhalten von Trainingsdaten für das geologische Datenverarbeitungstool, wobei die Trainingsdaten mehrere Labels umfassen;
Trainieren des geologischen Datenverarbeitungstools basierend auf den Trainingsdaten;
Empfangen von Daten, die ein physisches unterirdisches Volumen darstellen;
Identifizieren eines oder mehrerer geologischer Features im unterirdischen Volumen unter Verwendung des geologischen Datenverarbeitungstools nach dem Trainieren des geologischen Datenverarbeitungstools; und
Modifizieren eines oder mehrerer Parameter des geologischen Datenverarbeitungstools oder eines oder mehrerer Labels der mehreren Labels unter Verwendung des Clientsystems.

18. Medium nach Anspruch 17, wobei die Trainingsdaten vor der Offenlegung an ein Anbietersystem, aus dem das geologische Verarbeitungstool empfangen wird, geschützt sind.

19. Medium nach Anspruch 18, wobei das Clientsystem einen über das Internet zugänglichen entfernten Server umfasst, und wobei die Trainingsdaten in einer dem entfernten Server zugänglichen und für das Anbietersystem nicht zugänglichen verschlüsselten Datenbank gehalten werden.

20. Medium nach Anspruch 17, wobei die künstliche Intelligenz ein Convolutional Neural Network, eine Support Vector Machine oder beides umfasst.

**Revendications**

1. Procédé destiné au traitement de données géologiques, le procédé comprenant :

la réception d'un outil de traitement de données géologiques au niveau d'un système client (304), dans lequel l'outil de traitement de données géologiques comprend une intelligence artificielle et dans lequel l'outil de traitement de données géologiques est généré par un fournisseur d'outil de traitement géologiques ;
l'obtention des données d'apprentissage (314) destinée à l'outil de traitement de données géologiques, dans lequel les données d'apprentissage comprennent une pluralité d'étiquettes ;
l'apprentissage de l'outil de traitement de données géologiques (308) sur la base des données d'apprentissage ;
la réception des données (316) représentant un volume physique souterrain ;
l'identification d'une ou plusieurs caractéristiques géologiques (318) dans le volume souterrain à l'aide de l'outil de traitement des données géologiques après l'apprentissage de l'outil de traitement des données géologiques ; et
la modification (320), à l'aide du système client, d'un ou plusieurs paramètres de l'outil de traitement de données géologiques, ou une ou plusieurs étiquettes de la pluralité d'étiquettes.

2. Procédé selon la revendication 1, dans lequel les données d'apprentissage sont protégées de l'exposition à un système du fournisseur à partir duquel l'outil de traitement géologique est reçu.

3. Procédé selon la revendication 2, dans lequel le système client comprend un serveur distant accessible par Internet et dans lequel les données d'apprentissage sont conservées dans une base de données chiffrée accessible par le serveur distant et non accessible par le système du fournisseur.

4. Procédé selon la revendication 1, dans lequel l'intelligence artificielle comprend un réseau neuronal convolutif, une machine à vecteurs de support, ou les deux.

5. Procédé selon la revendication 1, dans lequel la formation de l'outil de traitement de données géologiques comprend la réception d'une identification d'une ou plusieurs caractéristiques géologiques dans une ou plusieurs images des données d'apprentissage, dans lequel la pluralité d'étiquettes est extensible par le système client.

6. Procédé selon la revendication 1, dans lequel la ou les caractéristiques géologiques comprennent au moins un élément parmi des horizons, des interfaces de couches, des géocorps, des failles, des canaux de sable, des cheminées de gaz, des pipelines, des trous de forage, des marqueurs de sommet de puits ou une pression interstitielle.

7. Procédé selon la revendication 1, dans lequel la réception des données d'apprentissage comprend l'obtention des données d'apprentissage depuis une base de données accessible au fournisseur d'outil géologique.

8. Procédé selon la revendication 1, dans lequel la réception des données d'apprentissage comprend la réception des données d'apprentissage depuis le système client et dans lequel l'outil de traitement géologique n'est pas accessible au fournisseur de l'outil de traitement géologique après l'apprentissage effectué.

9. Système informatique (901 B, C, D) comprenant :

un ou plusieurs processeurs (904) ; et
un système de mémoire (906) comportant une ou plusieurs instructions de stockage de supports non transitoires lisibles par ordinateur qui, lorsqu'elles sont exécutées par au moins un parmi le ou les processeurs, amènent le système informatique à réaliser les opérations, les opérations comprenant ;
la réception d'un outil de traitement de données géologiques au niveau d'un système client, dans lequel l'outil de traitement de données géologiques comprend une intelligence artificielle et dans lequel l'outil de traitement de données géologiques est généré par un fournisseur d'outil de traitement géologiques ;
l'obtention des données d'apprentissage destinée à l'outil de traitement de données géologiques, dans lequel les données d'apprentissage comprennent une pluralité d'étiquettes ;
l'apprentissage de l'outil de traitement de données géologiques sur la base des données d'apprentissage ;
la réception des données représentant un volume physique souterrain ;
l'identification d'une ou plusieurs caractéristiques géologiques dans le volume souterrain à l'aide de l'outil de traitement des données géologiques après l'apprentissage de l'outil de traitement des données géologiques ; et
la modification, à l'aide du système client, d'un ou plusieurs paramètres de l'outil de traitement de données géologiques, ou une ou plusieurs étiquettes de la pluralité d'étiquettes.

10. Système selon la revendication 9, dans lequel les données d'apprentissage sont protégées de l'exposition à un système du fournisseur à partir duquel l'outil de traitement géologique est reçu.

11. Système selon la revendication 10, dans lequel le système client comprend un serveur distant accessible par Internet et dans lequel les données d'apprentissage sont conservées dans une base de données chiffrée accessible par le serveur distant et non accessible par le système du fournisseur.

12. Système selon la revendication 9, dans lequel l'intelligence artificielle comprend un réseau neuronal convolutif, une machine à vecteurs de support, ou les deux.

13. Système selon la revendication 9, dans lequel la formation de l'outil de traitement de données géologiques comprend la réception d'une identification d'une ou plusieurs caractéristiques géologiques dans une ou plusieurs images des données d'apprentissage, dans lequel la pluralité d'étiquettes est extensible par le système client.

14. Système selon la revendication 9, dans lequel la ou les caractéristiques géologiques comprennent au moins un élément parmi des horizons, des interfaces de couches, des géocorps, des failles, des canaux de sable, des cheminées de gaz, des pipelines, des trous de forage, des marqueurs de sommet de puits ou une pression interstitielle.

15. Système selon la revendication 9, dans lequel la réception des données d'apprentissage comprend l'obtention des données d'apprentissage depuis une base de données accessible au fournisseur d'outil géologique.

16. Système selon la revendication 9, dans lequel la réception des données d'apprentissage comprend la réception des données d'apprentissage depuis le système client et dans lequel l'outil de traitement géologique n'est pas accessible au fournisseur de l'outil de traitement géologique après l'apprentissage effectué.

17. Instructions de stockage de support non transitoire lisible par ordinateur qui, lorsqu'elle sont exécutées par au moins un processeur (904) d'un système informatique (901), amènent le système informatique à réaliser les opérations, les opérations comprenant :

la réception d'un outil de traitement de données géologiques au niveau d'un système client, dans lequel l'outil de traitement de données géologiques comprend une intelligence artificielle et dans lequel l'outil de traitement de données géologiques est généré par un fournisseur d'outil de traitement géologiques ;
l'obtention des données d'apprentissage destinée à l'outil de traitement de données géologiques, dans lequel les données d'apprentissage comprennent une pluralité d'étiquettes ;
l'apprentissage de l'outil de traitement de données géologiques sur la base des données d'apprentissage ;
la réception des données représentant un volume physique souterrain ;
l'identification d'une ou plusieurs caractéristiques géologiques dans le volume souterrain à l'aide de l'outil de traitement des données géologiques après l'apprentissage de l'outil de traitement des données géologiques ; et

la modification, à l'aide du système client, d'un ou plusieurs paramètres de l'outil de traitement de données géologiques, ou une ou plusieurs étiquettes de la pluralité d'étiquettes.

18. Support selon la revendication 17, dans lequel les données d'apprentissage sont protégées de l'exposition à un système du fournisseur à partir duquel l'outil de traitement géologique est reçu.

19. Support selon la revendication 18, dans lequel le système client comprend un serveur distant accessible par Internet et dans lequel les données d'apprentissage sont conservées dans une base de données chiffrée accessible par le serveur distant et non accessible par le système du fournisseur.

20. Support selon la revendication 17, dans lequel l'intelligence artificielle comprend un réseau neuronal convolutif, une machine à vecteurs de support, ou les deux.

SYSTEM 100

MANAGEMENT COMPONENTS 110

| | |
|---|---|
| SEISMIC DATA 112 | OTHER INFORMATION 114 |

PROCESSING 116

| | | |
|---|---|---|
| ENTITIES 122 | SIMULATION 120 | ATTRIBUTE 130 |

| | |
|---|---|
| ANALYSIS/ VISUALIZATION 142 | OTHER WORKFLOW 144 |

FRAMEWORK 170

MODULES 175

MODEL SIMULATION 180

FRAMEWORK SERVICES 190

FRAMEWORK CORE 195

DOMAIN OBJECTS 182

DATA SOURCE 184

RENDERING 186

USER INTERFACES 188

160

GEOLOGIC ENVIRONMENT 150
(E.G., SENSING, DRILLING, INJECTING, EXTRACTING, ETC.)

155

1000

158

157

152

156

0

159

1000

2000

153-1

153-2

3000

154

4000

151

5000

**FIG. 1**

16

FIG. 2

300

Client System 202

Provider System 204

Generate training data
306

Generate an untrained
geological data
processing tool 302

Obtain training data 310

Train the untrained
geological data
processing tool to
generate a trained
geological processing tool
308

Provide the untrained
geological data
processing tool to a
system accessible to
the client 304

Train the untrained
geological processing
tool to generate a
trained geological
processing tool 312

Acquire data representing
a subterranean formation
316

Provide the trained
geological processing
tool to a system
accessible to the client
314

Identify geological
features in the
subterranean formation
using the trained
geological processing tool
318

Modify the geological data
processing tool 320

FIG. 3

**FIG. 4**

600

Labels — 606

INPUT → Convolution 1 ReLU 1 → Convolution 2 ReLU 2 → • • • → Convolution N ReLU N → Fully connected layer ReLU (N+1) → CNN Score

602

604

**FIG. 6**

Training Data

Input 1 | Input 2 | • • • | Input N

Labels 1 | Labels 2 | • • • | Labels N

Class 1 | Class 2 | • • • | Class N

**FIG. 5**

FIG. 7

FIG. 8

900

901A

902 — Analysis Module(s)

907

904 — Processor(s)

Network Interface

906 — Storage Media

908 — AI Module(s)

909

Computer System

901B

Computer System

901C

Computer System

901D

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1036341 A1